**Europäisches Patentamt**

**European Patent Office**

**Office européen des brevets**

(19)

(11) Numéro de publication : **0 496 665 A1**

## (12) DEMANDE DE BREVET EUROPEEN

(21) Numéro de dépôt : **92400152.2**

(22) Date de dépôt : **21.01.92**

(51) Int. Cl.⁵ : **F16K 31/64, F16K 3/16**

(30) Priorité : **25.01.91 FR 9100877**

(43) Date de publication de la demande :
**29.07.92 Bulletin 92/31**

(84) Etats contractants désignés :
**AT BE CH DE DK ES FR GB GR IT LI LU NL SE**

(71) Demandeur : **ALCATEL CIT**
**12 Rue de la Baume**
**F-75008 Paris (FR)**

(72) Inventeur : **Mathieu, Luc**
**1, rue des Cygnes**
**F-74940 Annecy le Vieux (FR)**

(74) Mandataire : **Gosse, Michel et al**
**SOSPI 14-16, rue de la Baume**
**F-75008 Paris (FR)**

(54) **Vanne.**

(57)   Vanne comprenant un corps de vanne (1) muni de deux ouvertures (2, 3) équipées chacune d'une bride (4, 5) pour son raccordement à une tuyauterie, et un clapet mobile (6) pour l'obturation de l'une (3) des deux ouvertures, ladite ouverture comportant un siège de clapet (26) dont le profil correspond à celui du clapet, ledit clapet (6) comportant des moyens (14, 8, 9, 24) de déplacement vers son siège, caractérisé par le fait que ledit clapet (6), ou son siège (26), est en alliage à mémoire de forme traité de manière à ce que l'effet de mémoire soit réversible, ledit organe (6, 26) en alliage à mémoire de forme comportant des canaux (27, 31) pour son alimentation par des fluides assurant les changements d'état provoquant selon le cas la dilatation ou la contraction dudit organe (6, 26) en alliage à mémoire de forme.

FIG.1

Jouve, 18, rue Saint-Denis, 75001 PARIS

EP 0 496 665 A1

De nombreuses applications, dans le domaine du vide, requièrent un système d'étanchéité sans joint élastomère. C'est le cas, par exemple de l'ultra-vide où les élastomères sont prohibés à la fois à cause du dégazage qu'ils engendrent et parce qu'ils limitent la possibilité d'étuver à haute température du fait de leur constitution. C'est le cas également dans le domaine nucléaire où les rayonnements endommagent très rapidement les joints élastomères.

Pour éviter de tels joints, on connaît des systèmes où l'étanchéité est faite métal sur métal. En particulier, le brevet français 2 470 315 décrit un système dans lequel un anneau métallique est coincé entre un cône fixe formant siège de clapet et un cône mobile solidaire dudit clapet.

Un tel dispositif, de même que la plupart des systèmes d'étanchéité entièrement métalliques, requiert une force importante pour assurer correctement l'étanchéité, ce qui en limite l'application à des diamètres moyens.

La présente invention a pour but de proposer une vanne qui ne nécessite pas de force mécanique importante, qui soit de grande durée de vie, qui s'appplique à tout diamètre et dont le maintien dans le temps de l'étanchéité n'est pas tributaire d'une source d'énergie.

L'invention a ainsi pour objet une vanne comprenant un corps de vanne muni de deux ouvertures équipées chacune d'une bride pour son raccordement à une tuyauterie, et un clapet mobile pour l'obturation de l'une des deux ouvertures, ladite ouverture comportant un siège de clapet dont le profil correspond à celui du clapet, ledit clapet comportant des moyens de déplacement vers son siège, caractérisé par le fait que ledit clapet ou son siège est en alliage à mémoire de forme traité de manière à ce que l'effet de mémoire soit réversible, ledit organe en alliage à mémoire de forme comportant des canaux pour son alimentation par des fluides assurant les changements d'état provoquant selon le cas la dilatation ou la contraction dudit organe en alliage à mémoire de forme.

Le brevet français 1461355 décrit une vanne dans laquelle le siège de clapet comprend un anneau qui est équipé de résistances électriques. Ces résistances servent à chauffer l'anneau de manière à le dilater pour faire passer son rayon R à une valeur R + ΔR. Le clapet lui-même dont le rayon, à température ambiante, est égal à $R + \dfrac{\Delta R}{2}$ est alors placé sur son siège et l'on cesse alors l'alimentation électrique des résistances de chauffage de l'anneau.

Le phénomène utilisé ici est la dilation due à un chauffage, phénomène qui est tout à fait différent de celui du changement d'état des alliages à mémoire de forme. Dans ce dernier cas, les déformations sont beaucoup plus grandes et en outre dans l'invention, seule l'une des deux pièces, siège ou clapet est en alliage à mémoire de forme.

Ainsi, au moment de l'ouverture du clapet où les deux pièces sont en intime contact avant leur séparation, et où les échanges de températures se font donc aisément entre les deux pièces, seule la pièce en alliage à mémoire de forme reviendra à ses dimensions de départ alors que l'autre ne subira qu'un changement de dimension minime.

Dans le cas du document cité ci-dessus, et en dépit d'une barrière thermique possible mais difficile à réaliser en pratique entre les deux pièces, on risque un coincement, surtout si un collage superficiel s'est produit à la suite d'une longue période du clapet en position fermée.

On va maintenant donner la description d'un exemple de mise en oeuvre de l'invention en se rapportant au dessin annexé dans lequel:

La figure 1 représente une vanne selon l'invention.

La figure 2 montre en vue de côté la vanne de la figure 1 en position ouverte.

La figure 3 montre en vue de côté la vanne de la figure 1 en position fermée.

Les figures 4 et 5 donnent deux exemples de sections possibles pour le clapet et son siège.

La figure 6 représente le cas où c'est le siège du clapet qui est l'organe en alliage à mémoire de forme.

Les figures 7 et 8 montrent le clapet avec son circuit interne de circulation de fluide assurant les changements d'état.

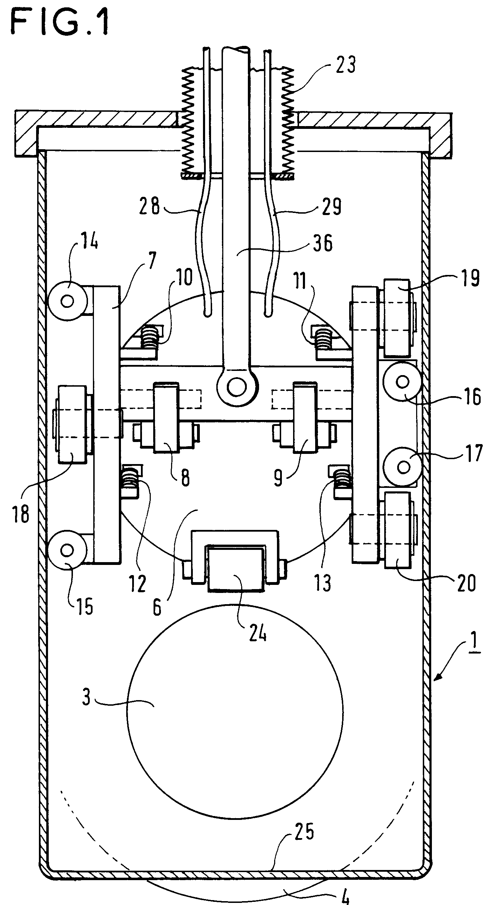

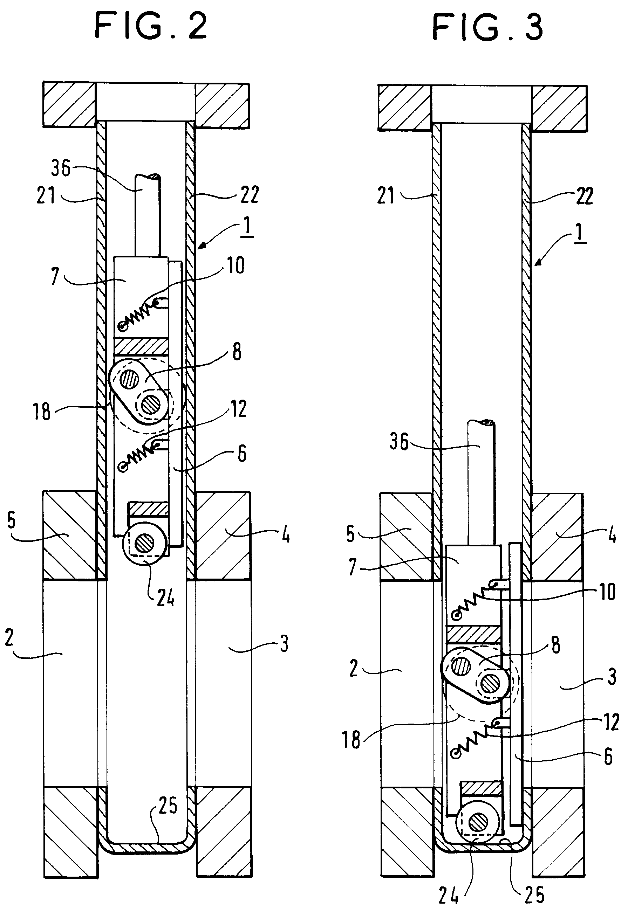

En se référant aux figures 1, 2 et 3, on voit une vanne comprenant un corps de vanne 1 munie de deux ouvertures 2 et 3 équipées de brides 4 et 5 pour le raccordement de la vanne à une tuyauterie. La vanne comporte un clapet d'obturation suspendu à un chariot 7 par deux bielles 8 et 9 et quatre ressorts de rappel 10 à 13. Le chariot 7 a pour but de déplacer le clapet 6 pour l'ouverture ou la fermeture de la vanne. Ce chariot 7 est lié à une tige de manoeuvre 36. Le chariot 7 est guidé latéralement par quatre galets de guidage 14 à 17 et dans l'autre direction latérale par seulement trois galets 18, 19 et 20 de grand diamètre légèrement inférieur à la distance qui sépare les deux parois 21 et 22 (figures 2 et 3) du corps 7, de telle sorte que ces galets roulent soit sur la paroi 21, soit sur la paroi 22. Lorsque la vanne est fermée (figure 3) et que le clapet est en appui contre son siège obturant l'ouverture 3, ces trois galets sont en appui contre la paroi 21.

Sur les figures 2 et 3, la tige de manoeuvre 36 n'a pas été représentée. Le mouvement de cette tige est parfaitement classique. Un soufflet d'étanchéité 23 assure l'étanchéité du corps de vanne d'une manière également très classique.

Lorsque le clapet descend, pour la fermeture de la vanne, il poursuit sa course jusqu'à ce qu'un galet 24, lié au clapet 6, vienne en butée contre le fond 25 du corps 1 de vanne. Une fois le clapet dans cette position, le chariot 7 peut encore, grâce aux bielles 8 et 9 descendre un peu, ce qui provoque le déplacement axial du clapet 6, par roulement au moyen du galet 24, jusqu'à l'appui contre le siège du clapet. A l'ouverture, lors de la remontée du chariot 7, les ressorts de rappel 10 à 13 rapprochent automatiquement le clapet 6 du chariot 7.

Selon l'invention, le clapet 6 ou son siège est en alliage à mémoire de forme, traité de façon à ce que l'effet de mémoire soit réversible, aussi bien dans le sens du passage de phase austénitique vers la phase martensitique, lors du refroidissement, que dans le sens du passage de phase martensitique vers la phase austénitique, lors du réchauffage.

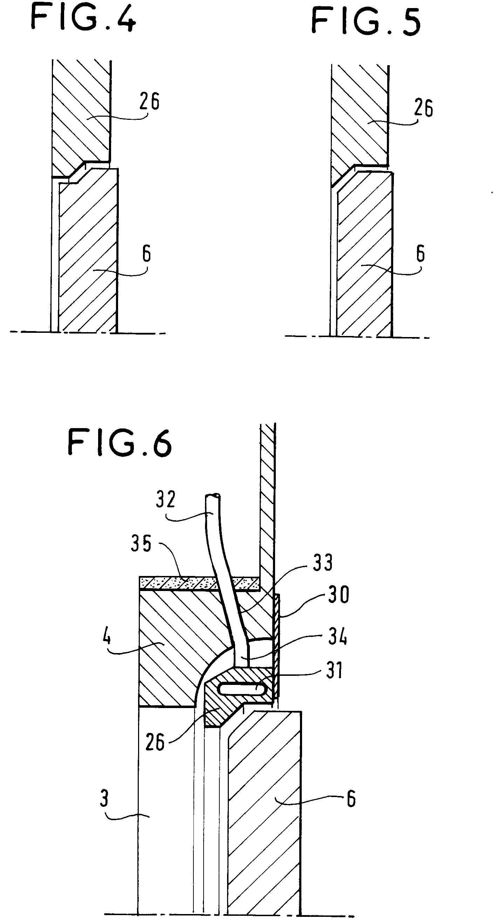

Les figures 4 et 5 montrent deux exemples de section possible du clapet 6 et de son siège 26.

Sur les figures 1 à 3, le siège 26 n'est pas représenté par mesure de simplification.

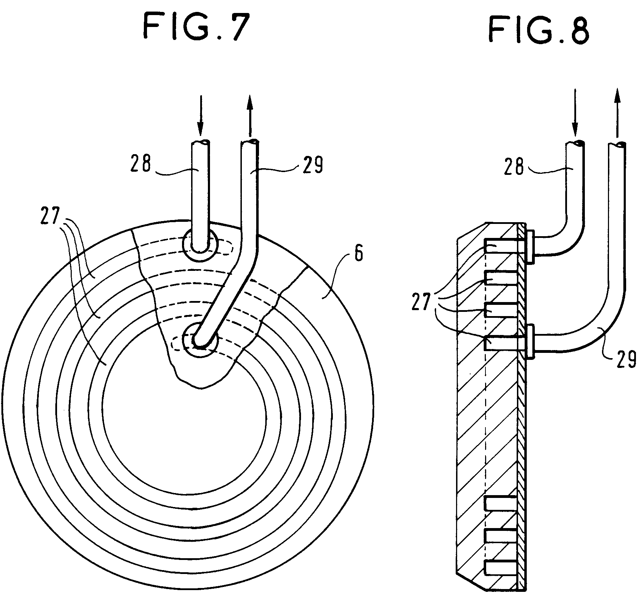

Les figures 7 et 8 montrent le canal interne 27 du clapet 6 pour la circulation des fluides pour le réchauffement et le refroidissement du clapet permettant les changements de phase. Des flexibles métalliques 28 et 29 permettent l'alimentation de ce canal 27.

Ainsi, pendant le mouvement d'amenée du clapet vers son siège 26, le clapet est refroidi et prend, en phase martensitique, la forme qui lui a été donnée lors des traitements "d'éducation" du clapet, ici une contraction. Dès que le clapet est contre son siège 26, on le réchauffe et il reprend sa forme initiale en phase austénitique. On obtient ainsi une excellente étanchéité avec contrainte du clapet 6 contre son siège 26. Le refroidissement peut être effectué par la circulation d'un liquide frigoriphique ou par la détente d'un gaz (cycle de clifford-Mac Mahon par exemple). Pour le réchauffement on peut faire circuler un liquide ou un gaz chaud.

La figure 6 montre un exemple dans lequel c'est le siège du clapet 26 qui est en alliage à mémoire de forme.

Dans cet exemple, le siège 26 est découplé thermiquement de la bride 4 par un anneau étanche 30 qui relie mécaniquement la bride 4 et le siège 1. Le siège 26 possède une chambre 31 de circulation de fluide alimentée par un flexible 32, un canal 33 qui traverse de façon étanche la bride 4 et un raccord 34.

L'anneau 30 est dimensionné de façon à être suffisamment rigide au moment de la fermeture du clapet et de façon à ce que les pertes thermiques soient faibles pendant le court laps de temps nécessaire. La bride 4 peut également être isolée de l'extérieur par un manchon isolant 35.

Dans ce dernier cas, lors du refroidissement en phase martensitique, le siège se dilate conformément à la forme dilatée qui lui a été donnée lors de "l'éducation de la pièce". Lors du réchauffement en phase austénitique, le siège se contracte contre le clapet 6 qui a été amené au fond de son siège.

Pour améliorer le contact et l'étanchéité, le clapet et/ou le siège peut être revêtu de métal mou tel que de l'argent par exemple.

Dans l'exemple décrit, le clapet de vanne est circulaire mais bien entendu cette forme circulaire n'est pas nécessaire de même que le type de vanne est quelconque.

On remarquera que par le principe même de l'invention, l'étanchéité ne peut être que renforcée dans le cas où la vanne serait placée dans une étuve. L'étuvage étant fréquent dans les applications en ultra vide.

Par ailleurs, grâce au même principe de l'invention, l'ouverture est toujours possible même contre une pression différentielle quel que soit son sens.

A titre d'exemples, on peut utiliser les alliages suivants : TiNi ou CuZnAl. Les températures de changement d'état peuvent être ajustées à volonté : 100°C par exemple dans un sens et 70°C dans l'autre sens.

## Revendications

1. Vanne comprenant un corps de vanne (1) muni de deux ouvertures (2, 3) équipées chacune d'une bride (4, 5) pour son raccordement à une tuyauterie, et un clapet mobile (6) pour l'obturation de l'une (3) des deux ouvertures, ladite ouverture comportant un siège de clapet (26) dont le profil correspond à celui du clapet, ledit clapet (6) comportant des moyens (14, 8, 9, 24) de déplacement vers son siège, caractérisé par le fait que ledit clapet (6), ou son siège (26), est en alliage à mémoire de forme traité de manière à ce que l'effet de mémoire soit réversible, ledit organe (6, 26) en alliage à mémoire de forme comportant des canaux (27, 31) pour son alimentation par des fluides assurant les changements d'état provoquant selon le cas la dilatation ou la contraction dudit organe (6, 26) en alliage à mémoire de forme.

# FIG.1

# FIG. 2

# FIG. 3

# FIG.4

# FIG.5

# FIG.6

# FIG.7

# FIG.8

Office européen
des brevets

**RAPPORT DE RECHERCHE EUROPEENNE**

Numero de la demande

EP    92 40 0152

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-C-361 654 (FISCHBACH) <br> * figure 2 * | 1 | F16K31/64 <br> F16K3/16 |
| A | FR-A-1 461 355 (WINKLER) <br> * page 1, colonne de droite, ligne 32 - page 2, colonne de gauche, ligne 2 * | 1 | |
| A | DE-B-2 026 629 (VEREINIGTE FLUGTECHNISCHE WERKE - FOKKER) <br> * revendication 1 * | 1 | |
| A | GB-A-1 047 610 (DINGLERWERKE) <br> * figure 1 * | 1 | |

DOMAINES TECHNIQUES RECHERCHES (Int. Cl.5)

F16K

Le présent rapport a été établi pour toutes les revendications

| Lieu de la recherche | Date d'achèvement de la recherche | Examinateur |
|---|---|---|
| BERLIN | 23 AVRIL 1992 | SCHLABBACH M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)